Europäisches Patentamt

European Patent Office

Office européen des brevets

(11) Publication number: **0 004 174**
**B1**

## EUROPEAN PATENT SPECIFICATION

(45) Date of publication of patent specification: **27.04.83**

(51) Int. Cl.³: **C 22 B 9/02, C 22 C 1/00**

(21) Application number: **79300333.6**

(22) Date of filing: **06.03.79**

(54) A process for refining a non-eutectic metal alloy.

(30) Priority: **08.03.78 US 884457**
**11.09.78 US 940820**

(43) Date of publication of application:
**19.09.79 Bulletin 79/19**

(45) Publication of the grant of the patent:
**27.04.83 Bulletin 83/17**

(84) Designated Contracting States:
**BE CH DE FR GB IT LU NL SE**

(56) References cited:
**FR - A - 1 594 154**
**FR - A - 2 266 749**
**GB - A - 508 925**
**GB - A - 557 553**
**GB - A - 777 368**
**US - A - 3 211 547**
**US - A - 3 374 089**
**US - A - 3 840 364**

(73) Proprietor: **MASSACHUSETTS INSTITUTE OF TECHNOLOGY**
**77 Massachusetts Avenue**
**Cambridge Massachusetts 02139 (US)**

(72) Inventor: **Flemings, Merton C.**
**11 Hillside Avenue**
**Cambridge Massachusetts (US)**
Inventor: **Lux, Andrew L.**
**1372 Apartment C. Whispering Pines Drive**
**Creve Coeur Missouri (US)**

(74) Representative: **Holdcroft, James Gerald, Dr. et al,**
**Graham Watt & Co. Riverhead**
**Sevenoaks Kent TN13 2BN (GB)**

(56) References cited:
**METALLURGICAL TRANSACTIONS, vol. 5,**
**March 1974, The Metallurgical Society of AIME,**
**New York, U.S.A.**
**R. MEHRABIAN et al.: "Refining by partial**
**solidification", pages 785—787**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## A process for refining a non-eutectic metal alloy

This invention relates to a process for refining a non-eutectic metal alloy by separating at least a portion of liquid from a solid-liquid composition formed from the metal alloy. The invention also relates to a process for obtaining a homogeneous fine grained metal alloy workpiece free of second phases.

Fractional crystallization as a means for purifying metal alloys is well known. The available purification procedures are based upon the fact that when an alloy which solidifies over a temperature range is taken to a temperature within its liquid-solid range, the solid phase has a composition different from the liquid phase. The average composition of both the liquid and solid portions of the metal alloy also depends upon the temperature of the liquid-solid mixture. By controlling the temperature of the system, the impurity to be removed can be isolated in either the solid or liquid phase. Thereafter, the solid and liquid phases are separated by physical means and the pure fraction is recovered.

A wide variety of physical separation means have been proposed which, combined with fractional crystallization, are designed to recover pure metal alloys or metals. For example, centrifugal filtration has been proposed wherein the liquid-solid mixture is subjected to centrifugal forces up to about 2,500 g and the liquid under this force is passed through a filter comprising all or a portion of the wall of the container housing the composition or comprising the solid metal composition itself, as disclosed in U.S. Patent 3,374,089. Alternatively, centrifugal sedimentation has been proposed. In this process, the liquid-solid mixture also is subjected to centrifugal forces to cause the solid phase to accumulate on the interior wall of the container housing the mixture and the liquid phase to accumulate within the central portion of the container. The liquid then is recovered selectively, such as by decantation. Also, the process disclosed in U.S. Patent 3,211,547 includes a step of forming crystals on the top surface of a liquid-solid aluminum composition allowing the crystals to settle and then compressing up to one-half of the surface area with tampers. The liquid then is recovered. Also, it has been proposed in British Patent 508,925 to heat a metal alloy to form a liquid-solid mixture and then subject the mixture to a pressure of at least 500 atmosphere in order to force the liquid through a filter to leave a solid.

While these processes are capable of increasing the purity of metal compositions, they are undesirable in that a substantial portion of the liquid remains unseparated from the solid and the "efficiency" of the process is low, i.e., that often the separation process must be repeated a number of times to obtain the desired purification.

It is an object of the present invention to overcome these objections and provide efficient, economical means of purifying metal.

Cast alloys possess significant dendritic micro-segregation after solidification. The secondary phase that results from "non-equilibrium" solidification limits the alloys that can be practically cast and worked, and the properties of alloys that are cast. For example, significant increases in strength of certain aluminum alloys could be achieved by increasing the alloy content. However, when such increases are made in ingots, the amount of eutectic increases to a point that ingot-working is difficult or impossible, ingot cracking is a problem, and the eutectic is not fully solutionized with practically obtainable cycles. Thus, methods such as atomization and thin plate casting have been employed to obtain a fine enough particle size so that solutionization can be obtained before extensive working. Secondary phases are well known to limit the mechanical properties of ferrous and superalloys, examples being the sulfides in steel and the alloy eutectic in $\gamma'$ strengthened super-alloys. If these alloys could be produced with a structure exactly like that now achieved, but without precipitation of this secondary phase at the end of solidification, significant increases in room temperature and elevated temperature properties could be obtained.

The invention provides a process for refining a non-eutectic metal alloy by separating at least a portion of liquid in a solid-liquid composition formed from the metal alloy, characterised by heating a metal alloy containing a dendritic solid phase at least from the non-equilibrium solidus temperature (where melting begins on heating) to a temperature below the melting point of the dendritic phase, while simultaneously confining said alloy under a pressure sufficient to overcome the inherent strength of the solid, to convert dendrites in the solid to a fine-grain structure and sufficient to cause the liquid to flow through and out of the solid.

The invention also provides the product of a process for obtaining a homogeneous fine grained metal alloy workpiece free of second phases including intermetallics and non-metallic inclusions that melt at a lower temperature than the primary solid and possessing at least 80% of the theoretical maximum equilibrium solute content and in cross-section having a thickness of at least 3 mm.

We have found that a remarkably efficient metal purification process results when metal alloys are heated within the liquid-solid region while being held under pressure to force the liquid being formed through a filter. The heating step causes sufficient melting to maintain open channels between the dendrite arms so that interdendritic liquid can be separated completely from the solid under moderate pressure. The resultant solid composition comprises a nondendritic structure which is free of secondary phase material. The final composition also has a fine grain structure. We believe the process provided herein is capable of completely removing the liquid which would otherwise solidify to form secondary phases, and fully compresses the remaining solid, so that when the liquid forming the secondary phase is substantially completely removed, the result is a fully dense, homogeneous solid without second phases, and therefore with greatly improved properties such as strength over the properties of presently available alloys.

There now follows a description, to be read with reference to the accompanying drawings, of embodiments of the invention. This description is given by way of example of the invention only and not by way of limitation thereof.

In the drawings:—

Fig. 1 is a cross-sectional side view of an apparatus used to conduct a batch process embodying this invention;

Fig. 2 is a photomicrograph of a cast tin-15% lead alloy prior to refining;

Fig. 3 is a photomicrograph of the alloy of Fig. 2 after a one-step isothermal refining process;

Fig. 4 is a photomicrograph of the alloy of Fig. 2 free of secondary phase material as obtained by the process of embodying this invention;

Fig. 5 is a graph illustrating the proportion of solid recovered as a function of alloy compositions for a given set of temperature and pressure conditions;

Fig. 6 is a graph illustrating the proportion of solid recovered by the process embodying this invention and a process of the prior art for the conditions utilized to obtain the graph of Fig. 5; and

Fig. 7 is a cross-sectional side view of an apparatus used to conduct a continuous process embodying this invention.

In a process embodying this invention, a metal composition is taken to a temperature at or near the non-equilibrium solidus temperature (where melting begins on heating). During heating, the composition is subjected to a superatmospheric pressure to effect separation of the solid phase from the liquid phase. It is important to apply pressure at and above the non-equilibrium solidus temperature, but it is acceptable to apply it earlier provided that it does not cause "plugging" of the filter means. The pressurized heated composition is gradually increased in temperature to a temperature causing additional liquid to form and maintaining open channels between the dendrite arms so that the interdendritic liquid can be separated completely even when utilizing moderate pressure. The pressure utilized during this simultaneous heating and pressing operation is sufficient to overcome the inherent strength of the dendritic solid, to convert the dendrites to a fine-grain structure and is sufficient to cause the liquid to flow through and out of the solid. The pressures needed depend upon the ratio of solid to liquid, and the inherent strength of the solid dendritic structure. Generally, the pressure is above 3500 k Pa (500 lbs./sq. inch) and generally between 14,000 and 70,000 k Pa (between 2000 and 10,000 lbs./sq. inch). The phrase "separation efficiency" as used herein is defined as the percentage of liquid formed that is recovered from the solid. Separation efficiency is typically more than 75%. Separation can be effected in a closed container wherein liquid is forced through a filter having a pore size sufficiently small to selectively retain the solid or can be conducted between two surfaces open at the sides to force the liquid selectively out the open sides or through at least one of the surfaces which functions as a filter. After separation of liquid from solid, the solid can be removed from pressure and cooled quickly or slowly to room temperature to regulate the microstructure of the solid as desired. Alternatively, cooling can be conducted while the solid is under pressure.

The process embodying this invention is capable of improving the purity of an alloy which melts over a temperature range by virtue of the removal of liquid which can form secondary phase material. The process has the capacity for producing metal alloy compositions which are virtually 100% free of secondary phase material in contrast to prior art processes which are not capable of producing alloy compositions substantially free of secondary phase materials. While the process has the capability of producing highly purified metal alloy compositions, its usefulness is not limited to such applications. In fact, the process is useful and valuable when it is desired to remove even a small portion of the components which form secondary phase material. For example in certain instances such as when forming aluminum ingots by present commercial processes, it may be advantageous to remove even a small proportion of the material capable of forming secondary phases even though such ingots are better than 99% pure. Furthermore, in many instances, it is desirable to leave components which form secondary phase in the alloy composition since such components can be dissolved in the primary phase to form a solid solution having improved mechanical properties. In any event, the process is less expensive to operate as compared with presently available purification processes, is more efficient in that it permits obtaining a greater amount of purified solid and it is capable of producing an alloy substantially 100% free of secondary phase.

It has been found that the yield of solid purified metal is surprisingly high. For example, the yield of purified solid in the process embodying this invention can be as high as 5 times greater than the isothermal process.

The novel purified solid metal composition that can be obtained by the process embodying this invention differs from normal dendrite structures, in that the grain structure is refined, porosity is low or absent and second phases are virtually totally absent. Additional benefits can accrue from the structural differences. As used herein, the term "secondary phase" means a second usually crystalline phase which forms late in solidification in conventional processes and which includes intermetallics and oxides. The products obtained by the process embodying this invention which are free of secondary phases are capable of being of much higher concentration of the solute portion of the alloy than is possible in conventional solidification. Thus, the new compositions possess as nearly as desired the desired maximum equilibrium solute content of at least 80%. Furthermore, the new compositions can be obtained in much larger sizes of at least 3 mm. ($\frac{1}{8}$ inch thick as compared with prior art processes for obtaining secondary phase-free compositions such as splat cooling. Thus, the compositions embodying this invention can be worked such as by pressing or forging or can be utilized as cast.

Any suitable metal alloy system regardless of its chemical composition can be employed in the process embodying this invention, except that pure metals or alloys that melt at a single temperature cannot be employed. Representative suitable alloys include magnesium alloys, zinc alloys, aluminum alloys, copper alloys, iron alloys, nickel alloys, cobalt alloys and lead alloys such as lead-tin alloys, zinc-aluminum alloys, zinc-copper alloys, magnesium-aluminum alloys, magnesium-aluminum-zinc alloys, magnesium-zinc alloys, aluminum-copper alloys, aluminum-silicon alloys, aluminum-copper-zinc-magnesium alloys, copper-tin bronzes, brass, aluminum bronzes, steels, cast irons, tool steels, stainless steels, superalloys such as nickel-iron alloys, nickel-iron-cobalt-chromium alloys, and cobalt-chromium alloys, or nearly pure metals such as iron, copper, or aluminum which nearly pure metals it is desired to refine more fully.

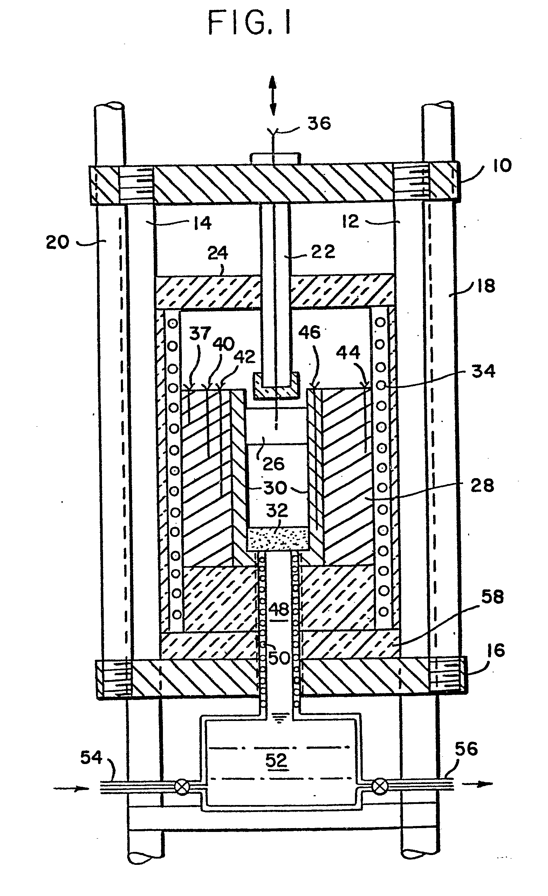

Referring to Figure 1, the apparatus includes an upper compression plate 10 supported by rods 12 and 14 and a lower compression plate 16 supported on rods 18 and 20. Rods 18 and 20 are slidably mounted through plate 10 and rods 12 and 14 are slidably mounted through plate 16. A plunger rod 22 is supported on plate 10, extends through insulation wall 24 and is positioned to contact plunger 26 when in use. A brass cylinder 28 is provided with an opening to house a crucible 30 to contain the liquid-solid sample. The bottom of the crucible 30 is provided with a filter 32 such as porous alumina. A resistance heating furnace 34 surrounds the cylinder 28. Thermocouple 36 is provided in plunger 22 and thermocouples 37, 40, 42 and 44 are provided in cylinder 28. A thermocouple 46 also is provided in crucible 30. A quench channel 48 including a heating coil 50 is provided below the filter 32. The quench channel 48 is connected to the quench chamber 52 which is provided with a liquid inlet 54 and a liquid outlet 56. An insulation plate 58 is located below the furnace-crucible arrangement.

In operation, the sample is placed in crucible 30 and heating coil 34 is activated so that the sample, crucible 30, cylinder 28 and plunger 26 are taken to the temperature at which separation is desired as determined by the thermocouples 36, 37, 40, 42, 44 and 46. During heating, pressure is generated by the upper plate 10 and plunger rod 22 which is transferred to the plunger 26 and to the sample. The liquid phase, under pressure, passes through the filter 32, quench channel 48 and into quench chamber 52. The solid phase is retained in the crucible 30 by filter 32. In the second step, the metal retained in crucible 30 is partially melted to form open channels between the dendritic arms while the pressure is maintained or increased. The resultant solid composition is free of secondary phase material and comprises a fine-grain microstructure.

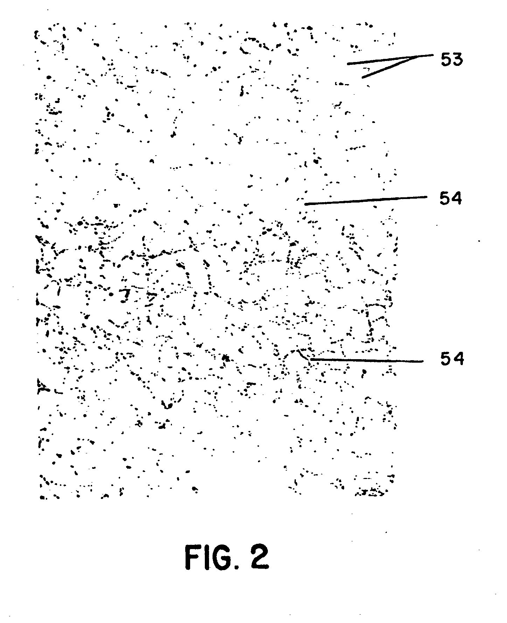

Referring to Figure 2, the photomicrograph is taken at 130 times magnification. The tin-15% lead alloy comprises dendrites 53 shown in white surrounded by solid secondary phase material 54 shown in black.

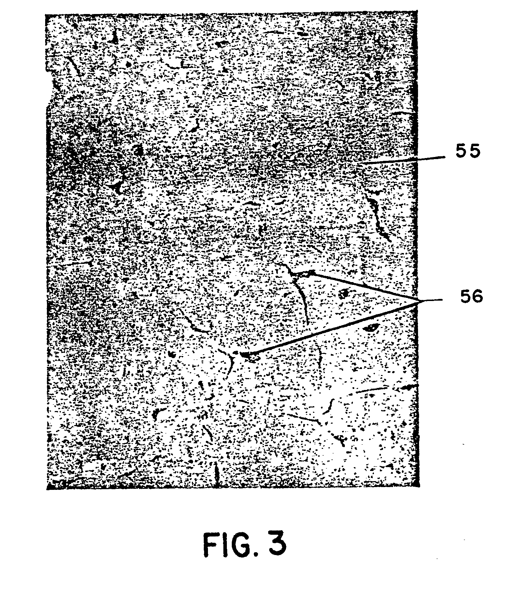

Figure 3 shows the alloy of Figure 2 after being heated to 193°C which corresponds to 53% solid and being subjected to a pressure of 19.7 MPa (2835 lbs./sq. inch) in a one-step isothermal process. The final alloy comprises dendrites 55 shown in white and secondary phase material 56 shown in black. Approximately 95% of the secondary phase liquid was separated from the liquid-solid precursor to the alloy shown.

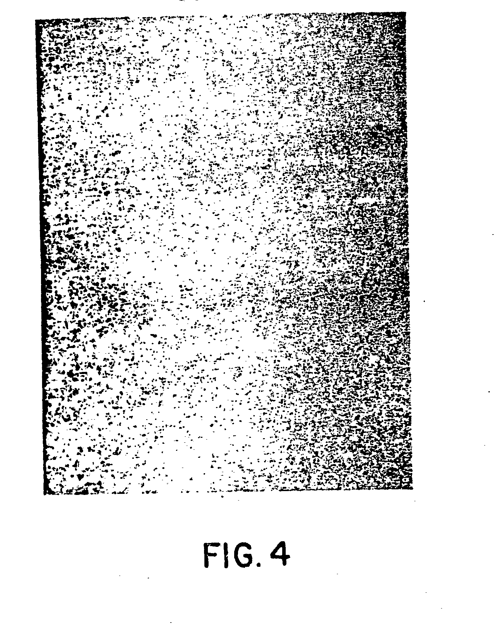

Figure 4 is a photomicrograph taken at 130 times magnification of a composition embodying the invention as derived from the composition shown in Figure 2. The composition of Figure 2 was heated to just below the non-equilibrium solidus temperature (1°C below 183°C) and was then subjected to a pressure of 19.7 MPa (2853 lbs./sq. inch), while it was continuously heated to 193°C and then held at that temperature and pressure for about 1 minute. The resultant solid was cooled to room temperature and had the fine-grain microstructure free of any secondary phase material as shown. Thus, essentially 100% of the liquid formed during heating from 183°C to 193°C was separated from the solid by this process.

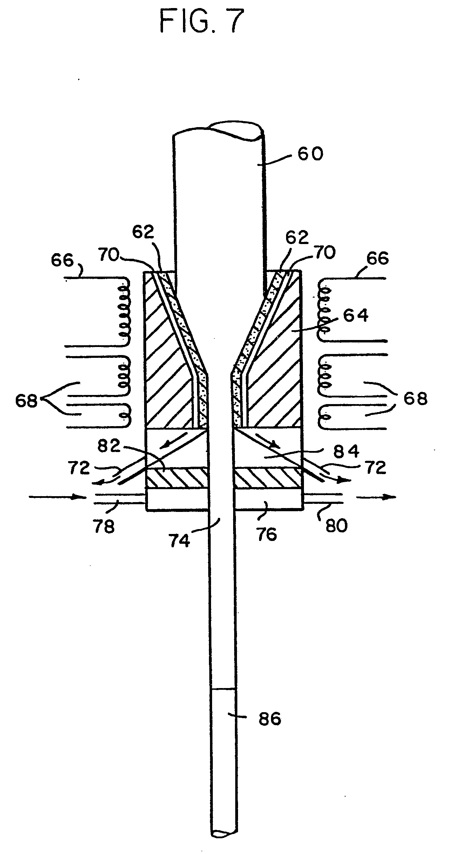

Referring to Figure 7, a feed bar 60 formed of a metal alloy is directed under pressure into contact with a porous inclined conical plate 62. The plate 62 is supported on a thermally conducting base 64. Heaters 66 are positioned near the top of the porous plate 62 in order to heat the metal to its non-equilibrium solidus temperature and heaters 68 are positioned near the bottom of plate 62 to heat the metal alloy to the desired final temperature. The liquid formed is forced through plate 62 and is allowed to rush down a gap 70 between plate 62 and base 64 and is removed through parts 72. The refined solid 74 is passed through cooling disk 76 through which a cooling liquid such as water is passed in order to fully cool the bar and minimize undesirable creep. Cooling liquid enters disk 76 through conduit 78 and is removed through conduit 80. An insulation disk 82 is positioned between cooling disk 80 and base 84. Dummy bar 86 can be used in a conventional manner to initiate passage of the feed bar through the apparatus.

Example

This Example was conducted with cast tin-15% lead alloy having the microstructure shown in Figure 2. The experiment was performed in the apparatus shown in Figure 1. As set forth above, the apparatus includes a temperature controlled furnace, a stainless steel crucible for holding semisolid samples, the filter and a speed-controlled plunger to squeeze liquid through the filter.

The furnace was cylindrical and had 610 watt capacity resistance elements rated at 1210°C. A stainless steel crucible, 2.54 cm. (1 inch) in diameter and 7.62 cm. (3 inches) in length, was placed in the center of the furnace.

Temperature was virtually uniform and constant within the sample. Temperature gradients were eliminated by surrounding the sample and crucible with a heavy brass cylinder and adding a secondary heater around the quench channel. Several chromel-alumel thermocouples are positioned in the crucible wall and the brass cylinder. A thermocouple also runs down a central hole through the plunger-rod and into the plunger, itself, ending 3 mm. ($\frac{1}{8}$ inch) from the top of the sample. A test was performed only when it was ascertained that all thermocouples were reading within 0.5°C of each other and all were constant with time. The alumina filter used in this Example was ground to +0.025 mm. (+0.001 inch) less than the inside diameter of the crucible, was 6.3 mm. ($\frac{1}{4}$ inch) thick and had pores of an average size of 200 $\mu$m. It was positioned by first heating the crucible to 300°C and then inserting the filter. This provides a tight fit with no leakage between the periphery of the filter and the crucible. The plunger is driven by a compression cage apparatus which fits into a Hounsfield tensometer. The tensometer is driven by a speed-controlled motor, and the plunger motion and force are recorded simultaneously during a test.

The load was measured by the deflection of a calibrated spring beam. The deflection of the spring beam is transmitted through a lever system to a piston which displaces mercury into a glass tube (mercury column). The movement of the mercury column is followed by manual pushing of a cursor which has an attached needle. This needle punctures the graph sheet at specified time intervals, thus recording the force. The graph sheet is attached to a drum which rotates as the driving gear mechanism of the tensometer rotates.

Samples of the dendritic Sn, 15% Pb were cast, cut to approximately 4.4 cm. (1$\frac{3}{4}$ inches) in length, and machined in order to fit snugly in the crucible. External to the furnace, the sample was placed into the crucible and the plunger was positioned. This assembly was put into the furnace and then heated to the desired temperature. Heat-up rates were 10 and 100 and 100°C/hr. During heating to the desired terminal temperature, the plunger was driven downward so that a constant pressure of 19.7 MPa (2853 lbs./sq. inch) was maintained. At the maximum temperature, the experiment was ceased. In a control experiment the test sample was heated to 193°C and then the plunger was driven at a constant speed until a maximum pressure of 19.7 MPa (2853 lbs./sq. inch) was reached. Plunger speeds were $10^{-3}$, $10^{-2}$ and $10^{-1}$ cm/sec. As the plunger moved downwards, liquid was forced through the filter and fell into the water quench. In some tests, when the maximum load was reached, the condition of constant plunger speed was stopped, and instead pressure was held constant for 10 minutes; then the test was stopped. In the process embodying this invention, after a substantial portion of the liquid was removed at 183°C, the sample was further continuously heated to 193°C while still under pressure and all of the liquid formed in the sample was removed from the sample.

At the conclusion of each experiment, the plunger was quickly withdrawn and the crucible and remaining alloy (cake) were removed from the furnace and quenched. Samples for metallography and chemical analyses were removed from both the cake and filtrate. The cake obtained by the isothermal, control, procedure had the microstructure shown in Figure 3. The cake obtained by the two-step procedure embodying this invention was free of secondary phase material and had the microstructure shown in Figure 4.

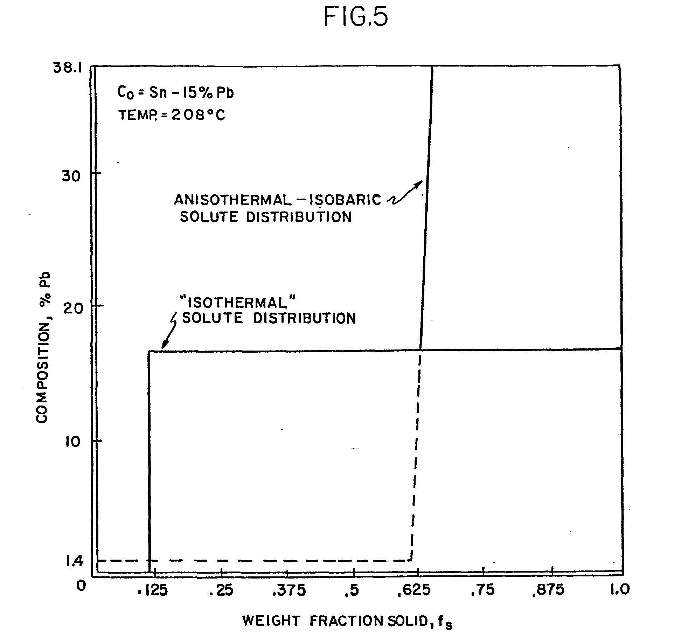

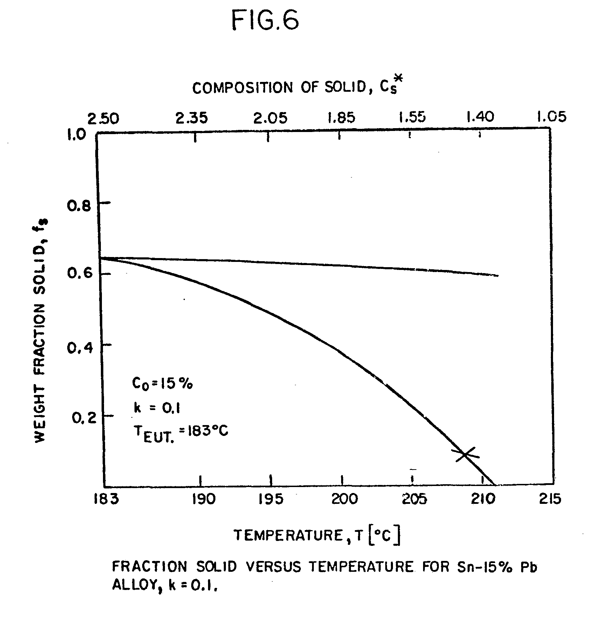

In addition to the runs set forth above, the samples in each process were subjected to a range of final temperatures as shown in Figure 6. Surprisingly, as shown in Figures 5 and 6, the amount of solid recovered over a temperature range of 183°C to 212°C final temperature was essentially constant and was about 62.5%. In contrast, the amount of solid obtained from the isothermal process ranged from about 62.5% at 183°C to a minimal amount at 212°C.

**Claims**

1. A process for refining a non-eutectic metal alloy by separating at least a portion of liquid in a solid-liquid composition formed from the metal alloy, characterised by heating a metal alloy containing a dendritic solid phase at least from the non-equilibrium solidus temperature (where melting begins on heating) to a temperature below the melting point of the dendritic phase, while simultaneously confining said alloy under a pressure sufficient to overcome the inherent strength of the solid, to convert dendrites in the solid to a fine-grain structure and sufficient to cause the liquid to flow through and out of the solid.

2. A process according to claim 1, wherein the pressure is above 3500 k Pa (35 kgf/cm²).

3. A process according to claim 1, wherein the pressure is between 14,000 and 70,000 k Pa (140 and 700 kgf/cm²).

4. A process according to any one of the preceding claims wherein the liquid and solid are housed in a container (30) and the liquid is forced under pressure through a filter (32) to pass said liquid through said filter and to retain said solid in said container.

5. A process according to any one of claims 1 to 3, wherein said composition is passed under pressure continuously through a zone (62) wherein said composition is subjected to said pressure and is heated from its non-equilibrium solidus temperature (where melting begins on heating) to a temperature below the melting point of the dendritic phase to form said liquid; and said liquid and said solid are continuously removed, each separate from the other, from said zone under pressure.

6. A process according to any one of the preceding claims wherein more than 75% of the liquid formed is separated from the solid.

7. A process according to any one of claims 1—5 wherein separation is carried out so that the remaining metal from which liquid has been separated is an alloy possessing at least 80% of the theoretical maximum equilibrium solute content and the alloy is formed into a workpiece which in cross-section has a thickness of at least 3 mm., the alloy of the workpiece being homogeneous and free of second phases including intermetallics and non-metallic inclusions that melt at a lower temperature than the primary solid.

## Revendications

1. Procédé pour l'affinage d'un alliage métallique non eutectique consistant à séparer au moins une partie du liquide d'une composition solide-liquide formée à partir de l'alliage métallique, caractérisé en ce qu'on chauffe un alliage métallique contenant une phase solide dendritique au moins à partir de la température du solidus de non équilibre (à laquelle commence la fusion lors du chauffage), jusqu'à une température inférieure au point de fusion de la phase dendritique, tout en maintenant simultanément ledit alliage sous une pression suffisante pour surmonter la force inhérente du solide, convertir les dendrites du solide en une structure à grains fins et suffisante pour provoquer l'écoulement du liquide à travers et hors du solide.

2. Procédé selon la revendication 1, caractérisé en ce que la pression est supérieure à 3500 k Pa.

3. Procédé selon la revendication 1, caractérisé en ce que la pression est comprise entre 14.000 et 70.000 k Pa.

4. Procédé selon l'une quelconque des revendications précédentes, caractérisé en ce que le liquide et le solide sont placés dans un récipient (30) et le liquide est forcé sous pression à travers un filtre (32) afin de le faire passer à travers le filtre et de retenir ledit solide dans le récipient.

5. Procédé selon l'une quelconque des revendications 1 à 3, caractérisé en ce qu'on fait passer en continu et sous pression, la composition, à travers une zone (62) dans laquelle la composition est soumise à ladite pression et est chauffée à partir de sa température du solidus de non équilibre (à laquelle la fusion commence lors du chauffage) jusqu'à une température inférieure au point de fusion de la phase dendritique pour former le liquide; et ledit liquide et ledit solide sont éliminés en continu, chacun séparément de l'autre, de la zone sous pression.

6. Procédé selon l'une quelconque des revendications précédentes, caractérisé en ce que plus de 75 % du liquide formé est séparé du solide.

7. Procédé selon l'une quelconque des revendications 1 à 5, caractérisé en ce que la séparation est réalisée de telle sorte que le métal restant à partir duquel le liquide a été séparé, est un alliage possédant au moins 80 % de la teneur maximale théorique en soluté à l'équilibre et l'alliage est mis sous la forme d'une pièce ouvragée qui présente une section droite ayant une épaisseur d'au moins 3 mm, l'alliage de la pièce ouvragée étant homogène et exempt de phases secondaires comportant des inclusions non métalliques et intermétalliques qui fondent à une température inférieure à celle du solide primaire.

## Patentansprüche

1. Verfahren zur Raffination einer nichteutektischen Metallegierung durch Abtrennen zumindest eines Teils einer Flüssigphase von einer von der Metallegierung bebildeten Fest/Flüssigphasen-Zusammensetzung, dadurch gekennzeichnet, daß eine eine dendritische feste Phase enthaltende Metallegierung zumindest von der nichtgleichgewichtigen Solidustemperatur (bei der ein Schmelzen unter Erwärmen einsetzt) auf eine Temperatur unterhalb des Schmelzpunktes der dendritischen Phase erwärmt wird, während gleichzeitig die Legierung unter einem Druck solcher Größe gehalten wird, daß die Eigenfestigkeit der festen Phase überwunden wird, damit die Dendrite in der festen Phase in eine feinkörnige Struktur umgewandelt werden und die flüssige Phase durch die feste Phase hindurch- und aus dieser austritt.

2. Verfahren nach Anspruch 1, dadurch gekennzeichnet, daß der Druck mehr als 3500 kPa (35 kg/cm²) beträgt.

3. Verfahren nach Anspruch 1, dadurch gekennzeichnet, daß der Druck 14000 bis 70000 kPa (140 bis 700 kg/cm²) beträgt.

4. Verfahren nach einem der vorhergehenden Ansprüche, dadurch gekennzeichnet, daß die flüssige und die feste Phase in einem Behälter (30) untergebracht werden und die flüssige Phase unter Druck durch einen Filter (32) gedrückt wird, damit die flüssige Phase durch den Filter geführt und die feste Phase im Behälter zurückgehalten wird.

5. Verfahren nach einem der Ansprüche 1 bis 3, dadurch gekennzeichnet, daß die Zusammensetzung kontinuierlich unter Druck durch eine Zone (62) geleitet wird, in der die Zusammensetzung dem Druck ausgesetzt und von ihrer nichtgleichgewichtigen Solidustemperatur (bei der ein Schmeizen unter Erwärmen einsetzt) auf eine Temperatur unterhalb des Schmelzpunktes der dendritischen Phase erwärmt wird, um die flüssige Phase zu bilden, und daß die flüssige und die feste Phase, jeweils getrennt voneinander, fortlaufend aus der Zone unter Druck abgeführt werden.

6. Verfahren nach einem der vorhergehenden Ansprüche, dadurch gekennzeichnet, daß mehr als 75% der gebildeten Flüssigphase aus der festen Phase abgetrennt wird.

7. Verfahren nach einem der Ansprüche 1 bis 5, dadurch gekennzeichnet, daß die Abtrennung derart durchgeführt wird, daß das verbleibende Metall, von dem die Flüssigphase abgetrennt wurde, eine Legierung ist, die zumindest 80% des theoretischen maximalen Gleichgewichtsgehalts des gelösten Stoffes besitzt, und daß die Legierung zu einem Werkstück mit einem Querschnitt von zumindest 3mm Dicke geformt wird, wobei die Legierung des Werkstücks homogen und frei von intermetallische Verbindungen einschließenden Sekundärphasen und nicht-metallischen Einschlüssen ist, die bei einer niedrigeren Temperatur als die primäre feste Phase schmelzen.

0 004 174

FIG. 1

1

FIG. 2

FIG. 3

FIG. 4

## FIG.5

# 0 004 174

## FIG.6

COMPOSITION OF SOLID, $C_s^*$

WEIGHT FRACTION SOLID, $f_s$

$C_0 = 15\%$
$k = 0.1$
$T_{EUT.} = 183°C$

TEMPERATURE, $T[°C]$

FRACTION SOLID VERSUS TEMPERATURE FOR Sn-15% Pb ALLOY, k = 0.1.

# FIG. 7